# FASCICULE DE BREVET EUROPEEN

(11) **EP 1 515 599 B1**
(45) Date de publication et mention de la délivrance du brevet: **16.01.2008**
(21) Numéro de dépôt: 03759995.8
(22) Date de dépôt: 03.06.2003
(51) Int. Cl.: A01D 34/66

(54) **FAUCHEUSE ROTATIVE**
KREISELMÄHER
ROTARY MOWER

(30) Priorité: 14.06.2002 FR 0207606
(43) Date de publication de la demande: 23.03.2005
(73) Titulaire: KUHN S.A., 67706 Saverne Cedex (FR)
(72) Inventeur: WALTER, René, F-57620 Goetzenbruck (FR); NEUERBURG, Horst, F-67700 Saverne (FR); WOLFF, Michel, F-67670 Waltenheim sur Zorn (FR); KIRCH, Jacky, F-67700 Otterswiller (FR)
(74) Mandataire: Andres, Jean-Claude
(86) Numéro de dépôt international: PCT/FR2003/001660
(87) Numéro de publication internationale: WO 2003/105566

(56) Documents cités:
- EP-A- 0 427 353
- EP-A- 0 878 120
- EP-A- 0 965 258
- US-A- 4 426 828
- US-A- 4 761 940
- US-A- 4 890 445
- US-A- 5 012 635

## Description

La présente invention se rapporte au domaine technique général du machinisme agricole et en particulier au domaine des machines du type faucheuse ou faucheuse-conditionneuse.

Plus précisément, la présente invention concerne un dispositif de coupe d'une machine de coupe rotative, ledit dispositif de coupe comportant :
- un carter composé d'une partie supérieure, d'une partie inférieure et d'une pièce frontale liées entre elles par soudure, ladite pièce frontale ayant une épaisseur supérieure à l'épaisseur de ladite partie supérieure,
- au moins un palier de guidage lié audit carter au moyen d'éléments d'assemblage, et
- au moins un organe de coupe lié audit carter au moyen dudit palier de guidage, ledit organe de coupe étant entraîné en rotation lors du travail autour d'un axe dirigé vers le haut.

Le document EP 0 965 258 A1 décrit un tel dispositif de coupe. Ce dispositif de coupe connu comporte un carter constitué d'une partie supérieure, d'une partie inférieure et d'une pièce frontale. La partie supérieure est réalisée au moyen d'une tôle munie à l'arrière d'un pli dirigé à 90 degrés vers le bas. La partie inférieure est réalisée au moyen d'une autre tôle relativement plane. Pour sa part ladite pièce frontale a la forme d'un demi-cylindre dont la partie bombée est dirigée vers l'avant. A l'arrière dudit carter, la partie supérieure et la partie inférieure sont liées directement l'une à l'autre par soudure. La partie supérieure et la partie inférieure sont également liées ensemble par soudure à l'avant dudit carter mais via la pièce frontale. En règle générale avec les dispositifs de coupe de l'art antérieur, l'épaisseur de ladite partie supérieure est relativement faible, l'ordre de grandeur étant de 2 à 5 mm environ, afin de ne pas augmenter exagérément la masse dudit carter. D'une manière également courante, l'épaisseur de la tôle de la partie inférieure est sensiblement égale à l'épaisseur de la tôle de la partie supérieure. Par contre ladite pièce frontale constitue un élément massif dont l'épaisseur est beaucoup plus importante que l'épaisseur desdites parties supérieure et inférieure.

Ce dispositif de coupe connu comporte également un organe de coupe lié de manière pivotante audit carter au moyen d'un palier de guidage. Pour ce faire le palier de guidage comporte notamment un boîtier muni de roulements, lesquels roulements guident en rotation un arbre d'entraînement autour d'un axe dirigé vers le haut. L'extrémité supérieure dudit arbre d'entraînement est lié rigidement audit organe de coupe. L'extrémité inférieure dudit arbre d'entraînement s'étend à l'intérieur dudit carter où elle est liée rigidement à une roue dentée. Lors du travail, cette roue dentée est destinée à entraîner en rotation l'organe de coupe autour dudit axe dirigé vers le haut. D'une manière connue de l'homme de l'art, ce mouvement de rotation de l'organe de coupe permet à ce dernier de couper un produit sur pied, comme par exemple de l'herbe.

Dans ce document antérieur, le boîtier est lié rigidement et de manière amovible audit carter au moyen d'éléments d'assemblage, plus précisément par des tiges filetées ancrées dans la partie supérieure dudit carter. Ces tiges filetées sont destinées à traverser un trou prévu dans ledit boîtier, puis à recevoir un écrou. Le serrage de l'écrou permet ainsi de plaquer ledit boîtier contre ladite partie supérieure du carter.

Ce dispositif de coupe connu comporte cependant un certain nombre d'inconvénients.

En effet le couple de serrage appliqué sur l'écrou, voir même le couple de desserrage en cas de grippage, sollicite fortement en torsion la liaison entre l'élément d'assemblage et le carter. Cette liaison entre l'élément d'assemblage et le carter est en sus fortement sollicitée en traction par la force de serrage dudit écrou mais également par les chocs subis par l'organe de coupe lors du travail. Comme lesdits éléments d'assemblage sont ancrés dans une partie d'épaisseur relativement faible, la combinaison de ces deux types de sollicitation engendre des contraintes très importantes à l'interface entre l'élément d'assemblage et le carter. Lors du travail, ces contraintes risquent même de dépasser les limites admissibles en cas de rencontre dudit organe de coupe avec un obstacle. Les risques de rupture de cette liaison ne sont donc pas négligeables.

De plus la rigidité de la liaison entre le boîtier et le carter est relativement faible à cause de l'épaisseur réduite de la partie dudit carter supportant ledit boîtier. Les efforts subis par l'organe de coupe lors du travail risquent donc d'engendrer une modification excessive de l'orientation de l'arbre d'entraînement. Comme l'organe de coupe évolue à proximité immédiate du carter, une modification de l'orientation de l'arbre d'entraînement peut éventuellement provoquer une interférence entre ledit organe de coupe et ledit carter. Une telle déviation de l'arbre d'entraînement dégrade également l'alignement de la roue dentée, d'où une diminution de la qualité de son engrènement. Finalement ce manque de rigidité peut même être à l'origine d'une rupture par fatigue de ladite partie supérieure du carter.

Le document US 5 012 635 se rapporte à une faucheuse avec un carter réalisé en plusieurs modules reliés entre eux. Chacun de ces modules est formé par une pièce moulée avec des parois de différentes épaisseurs. Le carter ainsi constitué nécessite de nombreux usinages en vue de l'assemblage des modules, ce qui rend sa réalisation compliquée et onéreuse.

La présente invention propose avantageusement d'améliorer sur une machine telle que décrite dans l'introduction la fixation dudit palier de guidage sur ledit carter de manière à réduire voir supprimer les inconvénients de l'art antérieur.

A cet effet, le dispositif de coupe de la présente invention est caractérisé par le fait qu'au moins un élément d'assemblage destiné à lier ledit palier de guidage audit carter est ancré dans ladite pièce frontale d'épaisseur accrue.

Ainsi l'interface entre l'élément d'assemblage et le carter est avantageusement augmentée. Les différents efforts subis par l'élément d'assemblage engendrent donc des contraintes beaucoup plus faibles au niveau de cette interface. Les risques d'arrachage de l'élément d'assemblage sont par conséquent fortement diminués.

De plus les chocs subis par l'organe de coupe lors du travail sont désormais transmis à la pièce d'épaisseur accrue. Il y a donc une meilleure répartition des contraintes et une plus grande rigidité dans la liaison entre le boîtier et le carter. Les différents risques liés à un déplacement excessif de l'arbre d'entraînement sont donc également fortement réduits.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vue de dessus, une machine agricole conforme à l'invention,
- **la figure 2** représente, en vu de dessus, une partie du dispositif de coupe de la machine agricole de la figure 1,
- la **figure 3** représente, vu en coupe suivant la flèche 3 et à une autre échelle, le dispositif de coupe de la figure 2,
- la **figure 4** représente, vu en coupe partielle suivant la flèche 4 et à une autre échelle, le dispositif de coupe de la figure 2,
- la **figure 5** représente un agrandissement d'une partie centrale de l'élément d'assemblage de la figure 4.

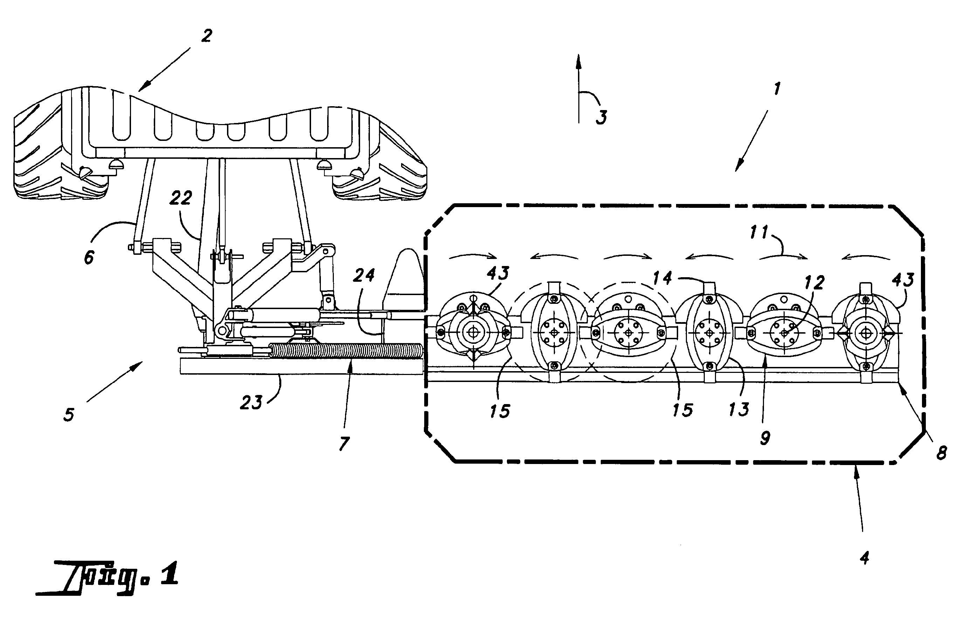

La figure 1 représente, en vue de dessus, une faucheuse agricole (1) conforme à la présente invention. Ladite faucheuse (1) est attelée à un véhicule moteur (2) qui la tire suivant une direction et un sens d'avance indiqué par la flèche (3). Dans la suite de la description, les notions suivantes "avant" et "arrière", "devant" et "derrière" sont définies par rapport au sens d'avance (3) et les notions "droite" et "gauche" sont définies en regardant ladite faucheuse (1) de l'arrière dans le sens d'avance (3).

D'une manière connue de l'homme de l'art, ladite faucheuse (1) comporte un dispositif de coupe (4) destiné à couper un produit sur pied tel que de l'herbe par exemple. Ladite faucheuse (1) comporte également un châssis (5) permettant de lier ledit dispositif de coupe (4) audit véhicule moteur (2).

Dans l'exemple de réalisation représenté sur la figure 1, ladite faucheuse agricole (1) est du type portée arrière. Ainsi une extrémité dudit châssis (5) est destinée à être attelée à un relevage trois points (6) disposé à l'arrière dudit véhicule moteur (2). L'autre extrémité dudit châssis (5) est par contre liée audit dispositif de coupe (4) au moyen d'une articulation. Ledit châssis (5) permet avantageusement de faire passer ledit dispositif de coupe (4) d'une position de travail sensiblement horizontale, telle que représentée sur la figure 1, à une position de transport, non représentée, et inversement. D'une manière préférentielle, ledit châssis (5) comporte un dispositif de suspension (7) destiné lors du travail à reporter au moins une partie du poids dudit dispositif de coupe (4) sur ledit véhicule moteur (2). D'une manière avantageuse, ledit dispositif de suspension (7) permet également audit dispositif de coupe (4) de suivre les irrégularités du sol indépendamment de la position dudit véhicule moteur (2). Un tel châssis (5) d'une faucheuse (1) est bien connu de l'homme du métier, il ne sera donc pas décrit d'avantage.

Le dispositif de coupe (4) conforme à la présente invention comporte un carter (8), au moins un organe de coupe (9), et au moins un palier de guidage (10) destiné à lier de manière pivotante ledit organe de coupe (9) audit carter (8). Lors du travail, ledit carter (8) repose au moins partiellement sur le sol, transversalement à ladite direction d'avance (3). D'une manière connue de l'homme de l'art, ledit carter (8) repose sur le sol avantageusement par l'intermédiaire de patins (43) représentés sur la figure 1. Ledit organe de coupe (9) quant à lui est disposé au-dessus dudit carter (8). De plus, ledit organe de coupe (9) est entraîné suivant un sens de rotation (11) autour d'un axe (12) dirigé vers le haut. Dans l'exemple de réalisation représenté sur les figures, ledit dispositif de coupe (4) comporte plus précisément six organes de coupe (9) liés audit carter (8) au moyen d'un palier de guidage respectif (10). Chaque organe de coupe (9) est entraîné en rotation autour d'un axe respectif (12) et suivant un sens respectif (11). D'une manière préférentielle, lesdits organes de coupe (9) sont alignés sur une droite et disposés dans un même plan d'extension.

D'une manière connue de l'homme de l'art, ce mouvement de rotation dudit organe de coupe (9) permet à haute vitesse, environ 3000 tours par minute, à ce dernier de couper ledit produit sur pied.

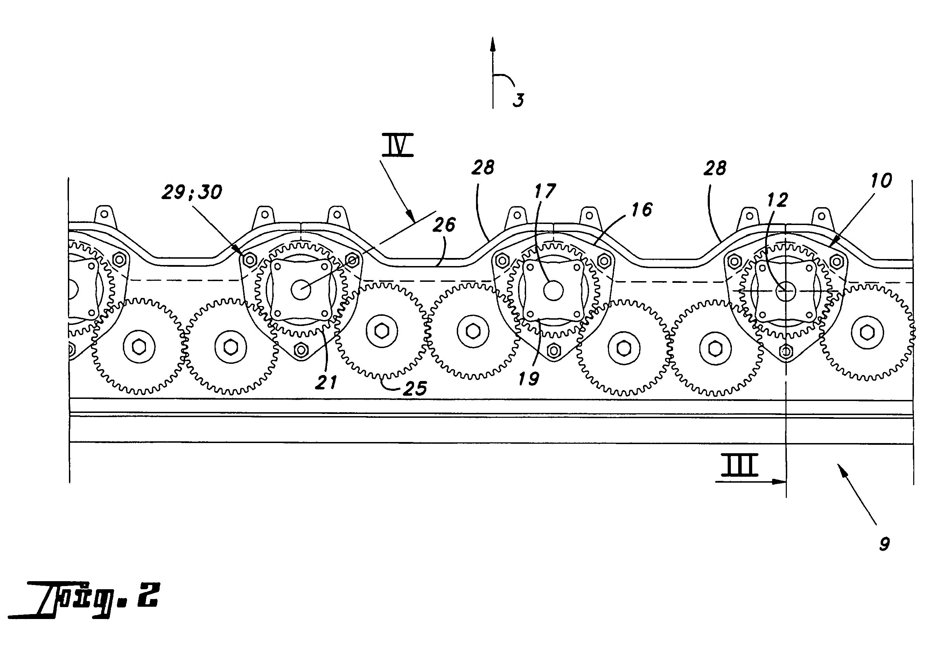

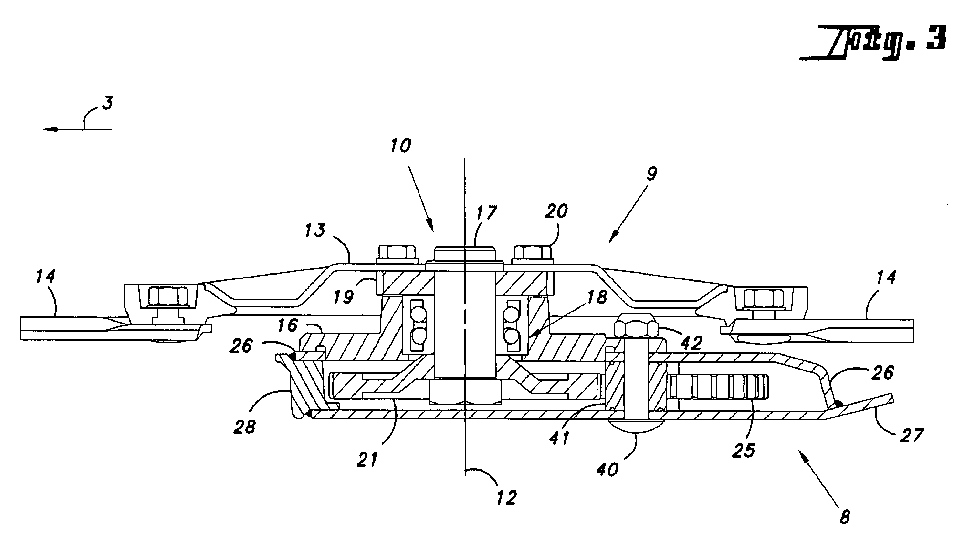

En effet dans l'exemple de réalisation représenté plus précisément sur les figures 1 et 3, ledit organe de coupe (9) comporte avantageusement un support (13) et deux éléments de coupe (14). Ledit support (13) s'étend dans un plan sensiblement perpendiculaire audit axe de rotation (12). Lesdits éléments de coupe (14) sont liés à la périphérie dudit support (13), de part et d'autre dudit axe de rotation (12). D'une manière préférentielle, ledit support (13) possède une forme ovale et lesdits éléments de coupe (14) sont avantageusement disposés aux extrémités d'un grand diamètre de ladite forme ovale. Comme ledit organe de coupe (9) est entraîné en rotation lors du travail, lesdits éléments de coupe (14) décrivent donc des cercles (15) autour dudit axe de rotation (12). La grande vitesse de déplacement atteinte ainsi par lesdits éléments de coupe (14) permet à ces derniers de couper par impact ledit produit sur pied.

Pour lier de manière pivotante ledit organe de coupe (9) audit carter (8), ledit palier de guidage (10) comporte un boîtier (16) et un arbre (17). Ledit arbre (17) est guidé en rotation autour dudit axe (12) par tous moyens connus de l'homme de l'art. Ainsi à la lumière de la figure 3, la liaison entre ledit arbre (17) et ledit boîtier (16) est avantageusement réalisée par un roulement (18). D'une manière préférentielle, l'axe longitudinal dudit arbre (17) est confondu avec ledit axe (12) dirigé vers le haut. L'extrémité supérieure dudit arbre (17) est munie d'un entraîneur (19) destiné à être lié rigidement audit organe de coupe (9). Dans l'exemple de réalisation représenté sur les figures, ledit entraîneur (19) est plus précisément lié audit support (13). De préférence, la liaison entre ledit entraîneur (19) et ledit support (13) est réalisée de manière amovible, par exemple au moyen de vis (20) visibles sur la figure 3. Ledit organe de coupe (9) peut ainsi facilement être remplacé si nécessaire.

Dans l'exemple de réalisation représenté sur les figures et d'une manière avantageuse, ledit palier de guidage (10) permet également d'entraîner en rotation lors du travail ledit organe de coupe (9) autour dudit axe (12). Pour ce faire, l'extrémité inférieure dudit arbre (17) est destinée à être liée à un organe de transmission (21). La réalisation de cet entraînement sera décrite ultérieurement plus en détails.

Pour sa part, ledit boîtier (16) est lié rigidement audit carter (8). D'une manière particulièrement avantageuse, la liaison entre ledit boîtier (16) et ledit carter (8) est réalisée de manière amovible au moyen d'éléments d'assemblage (29). L'ensemble dudit palier de guidage (10), lequel est constitué du boîtier (16), de l'arbre (17), de l'entraîneur (19), et de l'organe de transmission (21), peut ainsi facilement être remplacé si nécessaire.

Selon la présente invention, ledit carter (8) se compose d'une partie supérieure (26), d'une partie inférieure (27) et d'une pièce frontale (28). L'épaisseur de ladite pièce frontale (28) est plus importante que l'épaisseur de ladite partie supérieure (26).

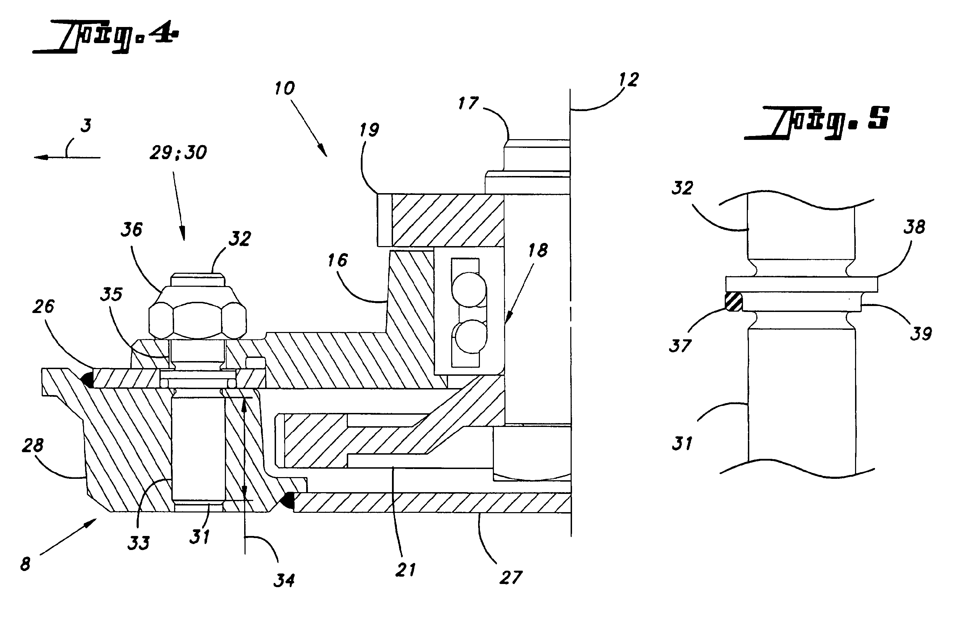

Dans l'exemple de réalisation représenté plus précisément sur les figures 3 et 4, ladite partie supérieure (26) est réalisée à partir d'une tôle qui s'étend avantageusement sur toute la longueur du dispositif de coupe (4). Pour sa part, ladite partie inférieure (27) est réalisée à partir d'une autre tôle, laquelle s'étend également sur toute la longueur du dispositif de coupe (4). D'une manière générale, l'épaisseur de ladite partie supérieure (26) et l'épaisseur de ladite partie inférieure (27) sont chacune inférieure à 10 millimètres. D'une manière préférentielle, chacune desdites épaisseurs est comprise entre 2 et 5 millimètres afin que la masse dudit carter ne soit pas excessive. Dans l'exemple de réalisation représenté sur les figures 3 et 4, ladite partie supérieure (26) et ladite partie inférieure (27) ont la même épaisseur.

La section de ladite pièce frontale (28) est par contre beaucoup plus importante. Ainsi à la lumière des plans de coupe des figures 3 et 4, la hauteur et la largeur de ladite section sont à titre indicatif toutes les deux supérieures à 10 millimètres. Ladite pièce frontale (28) est une pièce massive obtenue avantageusement à l'aide par exemple d'un procédé de moulage ou d'un procédé de forgeage. La section, de préférence la largeur, de ladite pièce frontale (28) peut de ce fait évoluer le long dudit carter (8) de manière à être plus importante aux endroits les plus sollicités. L'importante inertie de ladite pièce frontale (28) contribue considérablement à la rigidité dudit carter (8). D'une manière préférentielle, ladite pièce frontale (28) est également destinée à supporter lesdits patins (43) par l'intermédiaire desquels ledit carter (8) repose au moins partiellement sur le sol lors du travail. Les chocs subis par lesdits patins (43) lors du travail sont ainsi avantageusement transmis à la pièce massive dudit carter (8) et donc mieux encaisser.

Dans l'exemple de réalisation représenté sur les figures, ladite partie supérieure (26) et ladite partie inférieure (27) se rejoignent à l'avant dudit carter (8) par l'intermédiaire de ladite pièce frontale (28). Par contre à l'arrière dudit carter (8), ladite partie supérieure (26) rejoint directement ladite partie inférieure (27). Pour ce faire, ladite partie supérieure (26) est pliée à l'arrière vers le bas. La liaison entre les différents éléments constituant ledit carter (8), à savoir ladite partie supérieure (26), ladite partie inférieure (27), et ladite pièce frontale (28), s'effectue avantageusement par soudure.

D'une manière préférentielle et à la lumière plus particulièrement de la figure 2, la longueur dudit carter (8) est constituée de plusieurs pièces frontales (28) disposées de manière jointive. Chaque pièce frontale (28) prise individuellement s'étend sensiblement sur la distance séparant deux organes de coupe consécutifs (9). La longueur desdites pièces frontales (28) étant relativement petite, la fabrication de ces dernières notamment par moulage ou par forgeage est donc facilitée.

On notera que pour des raisons de clarté de nombreux éléments n'ont pas été représentés sur la figure 2, notamment lesdits patins (43) et lesdits organes de coupe (9).

A la lumière de la figure 1, l'entraînement desdits organes de coupe (9) s'effectue à partir de la prise de force dudit véhicule moteur (2). Pour ce faire, ladite faucheuse (1) comporte notamment un arbre de transmission télescopique à joints universels (22), un système poulies-courroie (23) et un carter de renvoi (24). A la lumière de la figure 2, le mouvement de rotation est ensuite reparti aux différents organes de coupe (9) à l'aide de roues intermédiaires (25). L'organe de transmission (21) desdits paliers de guidage (10) est donc réalisé dans cet exemple au moyen d'une roue dentée. On notera que sur la figure 2, lesdites roues intermédiaires (25) et lesdites roues dentées (21) ont été représentées par transparence.

En se referant en sus à la figure 3, lesdites roues intermédiaires (25) et lesdites roues dentées (21) s'engrènent mutuellement à l'intérieur dudit carter (8). Ces éléments de transmission étant lubrifiés par barbotage, ledit carter (8) est donc de préférence étanche. Dans l'exemple de réalisation représenté, l'étanchéité entre les différents éléments constitutifs dudit carter (8) est obtenue par ladite soudure. Les extrémités latérales dudit carter (8) sont fermées au moyen de plaques elles aussi liées de manière étanche au moyen d'une soudure par exemple.

Ladite partie supérieure (26) comporte avantageusement une ouverture permettant l'introduction au moins partielle dudit palier de guidage (10), notamment de ladite roue dentée (21), à l'intérieur dudit carter (8). Cette ouverture permet également de centrer ledit boîtier (16) par rapport auxdites roues intermédiaires avoisinantes (25). L'étanchéité entre ledit carter (8) et ledit boîtier (16) est réalisée par tous moyens connus de l'homme de l'art, tel qu'un joint torique par exemple.

D'autres manières de réaliser ledit carter (8) sont possibles sans pour autant s'écarter de la présente invention.

Ainsi selon un exemple de réalisation non représenté, ladite partie supérieure (26) et ladite partie inférieure (27) se joignent à l'arrière dudit carter (8) via une pièce intermédiaire.

Selon un autre exemple de réalisation non représenté, ladite partie supérieure (26) et ladite partie inférieure (27) sont réalisées à partir d'une seule et même tôle. A l'arrière dudit carter (8), cette tôle est pliée à 180 degrés de manière à dessiner la forme d'un « U » dont l'ouverture est orientée vers l'avant dudit carter (8).

Selon encore un autre exemple de réalisation non représenté, ladite partie supérieure (26) et ladite partie inférieure (27) se rejoignent directement à l'avant dudit carter (8). Dans un tel cas, ladite pièce frontale (8) peut ne pas participer à la fermeture de la cavité formée par ledit carter (8). Par contre ladite pièce frontale (8) reste liée par soudure à ladite partie supérieure (26) et/ou à ladite partie inférieure (27).

Le dispositif de coupe (4) de la présente invention est remarquable par le fait qu'au moins un desdits éléments d'assemblage (29) destinés à lier ledit palier de guidage (10) audit carter (8) est ancré dans ladite pièce frontale (28) d'épaisseur accrue. C'est à dire que les efforts de traction et/ou de torsion subis par ledit élément d'assemblage (29) sont transmis à ladite pièce frontale (28).

Dans l'exemple de réalisation représenté plus particulièrement sur la figure 4, ledit élément d'assemblage (29) ancré dans ladite pièce frontale (28) est réalisé au moyen d'un goujon (30). D'une manière connue de l'homme de l'art, ledit goujon (30) comporte une première partie filetée (31) et une deuxième partie filetée (32). Ladite première partie filetée (31) est destinée à être vissée dans un taraudage (33) réalisée dans ladite pièce frontale (28). Pour sa part, ladite deuxième partie filetée (32) est destinée à traverser un trou (35) réalisé dans ledit boîtier (16) puis à recevoir un écrou (36). En serrant ledit écrou (36), ledit boîtier (16) est plaqué contre ledit carter (8) afin de réaliser une liaison rigide. Comme ladite pièce frontale (28) a une épaisseur accrue, la longueur d'implantation (34) de ladite première partie filetée (31) est relativement importante. De ce faite la liaison entre ledit goujon (30) et ledit carter (8) peut transmettre un effort et un couple plus important sans risque de rupture. Ledit boîtier (16) et donc ledit palier de guidage (10) sont liés d'une manière plus solide audit carter (8). De plus avec la présente invention, les chocs subis par ledit organe de coupe (9) sont encaissés par ladite pièce frontale (28) via ledit palier de guidage (10) et ledit goujon (30). Comme ladite pièce frontale (28) est une pièce massive donc de rigidité plus importante, les pics d'effort dus aux chocs sont mieux repartis dans ledit carter (8). En outre grâce à cette rigidité supérieure de la liaison entre ledit boîtier (16) et ledit carter (8), ledit axe de rotation (12) se déplace nettement moins lors des chocs. A la lumière de la figure 3, les risque d'interférence entre ledit organe de coupe (9) et par exemple l'arrière de la partie supérieure (26) dudit carter (8) sont donc grandement diminués. De plus un déplacement moindre dudit axe de rotation (12) suite aux chocs engendre un désalignement plus faible de ladite roue dentée correspondante (21). L'éventuelle augmentation des contraintes au niveau de l'engrènement entre ladite roue dentée (21) et la roue intermédiaire voisine (25) est par conséquent atténuée.

Dans l'exemple de réalisation représenté sur les figures, ladite partie supérieure (26) couvre partiellement le dessus de ladite pièce frontale (28). Ainsi ladite partie supérieure (26) comporte en sus un trou pour permettre audit goujon (30) d'atteindre ladite pièce frontale (28). Pour néanmoins garantir l'étanchéité dudit carter (8), ledit goujon (30) supporte avantageusement un joint torique (37). De ce fait à la lumière de la figure 5, ledit goujon (30) comporte une collerette (38) disposée entre ladite première partie filetée (31) et ladite deuxième partie filetée (32). Entre ladite collerette (38) et ladite première partie filetée (31), ledit goujon (30) comporte en sus un épaulement (39). En se referant à la figure 4, lors du montage dudit goujon (30) ladite première partie filetée (31) est vissée dans ledit taraudage (33) jusqu'à obtenir un contact entre ledit épaulement (39) et ladite pièce frontale (28). Pour ce faire, le diamètre de ladite collerette (38) est avantageusement inférieur au diamètre du trou réalisé dans ladite partie supérieure (26). Ledit joint torique (37) est ainsi légèrement écrasé entre ladite collerette (38) et ladite pièce frontale (28). Le lubrifiant présent dans ledit carter (8) ne peut donc pas s'échapper le long dudit taraudage (33). Ledit joint torique (37) est également légèrement écrasé entre ledit épaulement (39) et ladite partie supérieure (26). Tout passage de lubrifiant entre ladite partie supérieure (26) et ledit goujon (30) est donc également empêché. Lors du démontage, ledit écrou (36) est dévissé puis libéré de ladite deuxième partie filetée (32). Ladite première partie filetée (31) reste avantageusement ancrée dans ladite pièce frontale (28). Tout risque de perte dudit joint torique (37) est donc supprimé.

On notera également que pour des raisons de clarté, ledit joint torique (37) n'a été représenté que partiellement sur la figure 5. De plus ledit joint torique (37) a été représenté sous sa forme légèrement écrasée.

Dans l'exemple de réalisation représenté plus précisément sur la figure 2, chaque palier de guidage (10) est lié audit carter (8) au moyen de deux goujons (30). Lesdits goujons (30) sont disposés en avant et de part et d'autre dudit axe de rotation (12) correspondant. La fixation desdits paliers de guidage (10) est donc encore améliorée. De plus chaque palier de guidage (10) comporte en sus un troisième élément d'assemblage (29) disposé derrière et dans le prolongement dudit axe de rotation (12) correspondant. A la lumière maintenant de la figure 3, ledit troisième élément d'assemblage (29) est réalisé au moyen d'une vis (40). Dans l'ordre, ladite vis (40) traverse ladite partie inférieure (27), une entretoise (41), ladite partie supérieure (26), ledit boîtier (16) et un écrou (42). Il est également prévu une étanchéité d'une part entre ladite entretoise (41) et ladite partie supérieure (26), et d'autre part entre ladite entretoise (41) et ladite partie inférieure (27). Ces étanchéités sont réalisées par exemple au moyen de joints toriques.

D'autres manières de réaliser ledit élément d'assemblage (29) ancré dans ladite pièce frontale (28) sont possibles sans pour autant s'écarter de la présente invention.

Ainsi selon un exemple de réalisation non représenté, ledit élément d'assemblage (29) ancré dans ladite pièce frontale (28) est réalisé au moyen d'une vis dont le filetage est en prise dans ladite pièce frontale (28).

Dans un autre exemple de réalisation, cette vis traverse de bas en haut ladite pièce frontale (28). La tête de cette vis est avantageusement en prise dans une forme complémentaire prévue dans ladite pièce frontale (28) de manière à arrêter en rotation ladite vis. Le filetage de la vis traverse un trou réalisé dans ledit boîtier (16) pour recevoir un écrou (36).

Selon un autre exemple de réalisation non représenté, ledit élément d'assemblage (29) ancré dans ladite pièce frontale (28) est réalisé au moyen d'une tige filetée liée rigidement dans ladite pièce frontale (28), au moyen d'une soudure par exemple. Cette tige filetée traverse également ledit boîtier (16) pour recevoir un écrou (36).

Dans un autre exemple de réalisation encore, ladite partie supérieure (26) ne couvre pas le dessus de ladite pièce frontale (28). Ainsi au moins dans la zone dudit élément d'assemblage (29), ledit boîtier (16) s'appuie directement sur ladite pièce frontale (28).

La faucheuse (1) et le dispositif de coupe (4) qui viennent d'être décrits ne sont qu'un exemple qui ne saurait en aucun cas limiter le domaine de protection défini par les revendications suivantes.

En effet, le nombre et la forme desdits organes de coupe (9) peuvent être différents de ceux représentés sur les figures.

La transmission du mouvement de rotation auxdits organes de coupe (9) peut également être réalisée par tous autres moyens connus de l'homme de l'art, comme une chaîne par exemple.

De plus le dispositif de coupe (4) conforme à la présente invention peut très bien équiper une faucheuse de type traînée ou une faucheuse automotrice.

## Revendications

1. Dispositif de coupe d'une machine de coupe rotative (1), ledit dispositif de coupe (4) comportant :
- un carter (8) composé d'une partie supérieure (26), d'une partie inférieure (27) et d'une pièce frontale (28) liées entre elles par soudure, ladite pièce frontale (28) ayant une épaisseur supérieure à l'épaisseur de ladite partie supérieure (26),
- au moins un palier de guidage (10) lié audit carter (8) au moyen d'éléments d'assemblage (29), et
- au moins un organe de coupe (9) lié audit carter (8) au moyen dudit palier de guidage (10), ledit organe de coupe (9) étant entraîné en rotation lors du travail autour d'un axe (12) dirigé vers le haut,
***caractérisé par le fait qu**'*au moins un élément d'assemblage (29) destiné à lier ledit palier de guidage (10) audit carter (8) est ancré dans ladite pièce frontale (28) d'épaisseur accrue.

2. Dispositif de coupe selon la revendication 1, ***caractérisé par le fait que*** ladite partie supérieure (26) et ladite partie inférieure (27) ont une épaisseur sensiblement identique.

3. Dispositif de coupe selon la revendication 1 ou 2, ***caractérisé par le fait que*** ladite partie supérieure (26) et ladite partie inférieure (27) se rejoignent à l'avant dudit carter (8) par l'intermédiaire de ladite pièce frontale (28).

4. Dispositif de coupe selon l'une quelconque des revendications 1 à 3, ***caractérisé par le fait que*** ladite partie supérieure (26) et ladite partie inférieure (27) se rejoignent directement à l'arrière dudit carter (8).

5. Dispositif de coupe selon l'une quelconque des revendications 1 à 4, ***caractérisé par le fait que*** ladite partie supérieure (26) et ladite partie inférieure (27) sont réalisées à partir d'une seule et même tôle.

6. Dispositif de coupe selon l'une quelconque des revendications 1 à 5, ***caractérisé par le fait que*** ladite partie supérieure (26), ladite partie inférieure (27) et ladite pièce frontale (28) sont liées entre elles par soudure de manière à créer un carter (8) étanche.

7. Dispositif de coupe selon l'une quelconque des revendications 1 à 6, ***caractérisé par le fait que*** ledit carter (8) renferme des éléments de transmission (21, 25) destinés à entraîner en rotation ledit organe de coupe (9) autour dudit axe (12).

8. Dispositif de coupe selon l'une quelconque des revendications 1 à 7, ***caractérisé par le fait que*** ledit palier de guidage (10) est lié de manière amovible audit carter (8).

9. Dispositif de coupe selon l'une quelconque des revendications 1 à 8, ***caractérisé par le fait que*** ledit palier de guidage (10) est disposé au-dessus dudit carter (8).

10. Dispositif de coupe selon l'une quelconque des revendications 1 à 9, ***caractérisé par le fait que*** ledit élément d'assemblage (29) ancré dans ladite pièce frontale (28) est réalisé au moyen d'un goujon (30) comportant une première partie filetée (31) et une deuxième partie filetée (32).

11. Dispositif de coupe selon la revendication 10, ***caractérisé par le fait que*** ladite première partie filetée (31) est destinée à être vissée dans un taraudage (33) réalisé dans ladite pièce frontale (28).

12. Dispositif de coupe selon la revendication 10 ou 11, ***caractérisé par le fait que*** ladite première partie filetée (31) traverse un trou réalisé dans ladite partie supérieur (26) dudit carter (8).

13. Dispositif de coupe selon l'une quelconque des revendications 10 à 12, ***caractérisé par le fait que*** ledit goujon (30) comporte une collerette (38) disposée entre ladite première partie filetée (31) et ladite deuxième partie filetée (32), et que ledit goujon (30) comporte en sus un épaulement (39) disposé entre ladite collerette (38) et ladite première partie filetée (31).

14. Dispositif de coupe selon la revendication 13, ***caractérisé par le fait qu**'*il est prévu un joint torique (37), lequel joint torique (37) est légèrement écrasé lors du montage entre ladite collerette (38), ladite pièce frontale (28), ledit épaulement (39) et ladite partie supérieure (26).

15. Faucheuse agricole, ***caractérisée par le fait qu***'elle comporte un dispositif de coupe (4) selon l'une quelconque des revendications 1 à 14.

## Claims

1. Cutting device of a rotary cutting machine (1), the said cutting device (4) comprising:
- a gearbox (8) consisting of an upper part (26), a lower part (27) and a front piece (28) connected together by welding, the said front piece (28) having a thickness greater than the thickness of the said upper part (26),
- at least one guide bearing (10) connected to the said gearbox (8) by means of assembly elements (29), and
- at least one cutting member (9) connected to the said gearbox (8) by means of the said guide bearing (10), the said cutting member (9) being driven in rotation during work about an upwardly directed axis (12),
***characterized in* that** at least one assembly element (29) intended to connect the said guide bearing (10) to the said gearbox (8) is anchored in the said front piece (28) of increased thickness.

2. Cutting device as claimed in claim 1, ***characterized in* that** the said upper part (26) and the said lower part (27) have substantially the same thickness.

3. Cutting device as claimed in claim 1 or 2, ***characterized in* that** the said upper part (26) and the said lower part (27) are joined together at the front of the said gearbox (8) by means of the said front piece (28).

4. Cutting device as claimed in any one of claims 1 to 3, ***characterized in* that** the said upper part (26) and the said lower part (27) are joined together directly at the rear of the said gearbox (8).

5. Cutting device as claimed in any one of claims 1 to 4, ***characterized in* that** the said upper part (26) and the said lower part (27) are made of one and the same metal sheet.

6. Cutting device as claimed in any one of claims 1 to 5, ***characterized in* that** the said upper part (26), the said lower part (27) and the said front piece (28) are connected together by welding in such a manner as to create a sealed gearbox (8).

7. Cutting device as claimed in any one of claims 1 to 6, ***characterized in* that** the said gearbox (8) encloses transmission elements (21, 25) intended to drive the said cutting member (9) in rotation about the said axis (12).

8. Cutting device as claimed in any one of claims 1 to 7, ***characterized in* that** the said guide bearing (10) is removably connected to the said gearbox (8).

9. Cutting device as claimed in any one of claims 1 to 8, ***characterized in* that** the said guide bearing (10) is arranged above the said gearbox (8).

10. Cutting device as claimed in any one of claims 1 to 9, ***characterized in* that** the said assembly element (29) anchored in the said front piece (28) is made by means of a pin (30) comprising a first threaded part (31) and a second threaded part (32).

11. Cutting device as claimed in claim 10, ***characterized in* that** the said first threaded part (31) is intended to be screwed into a tapping (33) made in the said front piece (28).

12. Cutting device as claimed in claim 10 or 11, ***characterized in* that** the said first threaded part (31) passes through a hole made in the said upper part (26) of the said gearbox (8).

13. Cutting device as claimed in any one of claims 10 to 12, ***characterized in* that** the said pin (30) comprises a collar (38) arranged between the said first threaded part (31) and the said second threaded part (32), and that the said pin (30) additionally comprises a shoulder (39) arranged between the said collar (38) and the said first threaded part (31).

14. Cutting device as claimed in claim 13, ***characterized in* that** an O-ring (37) is provided, the said O-ring (37) being slightly flattened during mounting between the said collar (38), the said front piece (28), the said shoulder (39) and the said upper part (26).

15. An agricultural mower, ***characterized in* that** it comprises a cutting device (4) as claimed in any one of claims 1 to 14.

## Patentansprüche

1. Schneidvorrichtung einer Kreiselmähmaschine (1), wobei die Schneidvorrichtung (4):
- ein Gehäuse (8), bestehend aus einem oberen Teil (26), einem unteren Teil (27) und einem vorderen Teil (28), die miteinander durch Schweißen verbunden sind, wobei der vordere Teil (28) eine größere Dicke als die Dicke des oberen Teils (26) aufweist,
- mindestens ein Führungslager (10), das mit dem Rahmen (8) mittels Montageelementen (29) verbunden ist, und
- mindestens ein Schneidelement (9), das mit dem Gehäuse (8) mittels des Führungslagers (10) verbunden ist, wobei das Schneidelement (9) in Drehung während der Arbeit um eine nach oben gerichtete Achse (12) angetrieben wird,
umfasst, ***dadurch gekennzeichnet,* dass** mindestens ein Montageelement (29), das dazu bestimmt ist, das Führungslager (10) mit dem Gehäuse (8) zu verbinden, in dem vorderen Teil (28) mit größerer Dicke verankert ist.

2. Schneidvorrichtung nach Anspruch 1, ***dadurch gekennzeichnet,* dass** der obere Teil (26) und der untere Teil (27) eine im Wesentlichen identische Dicke haben.

3. Schneidvorrichtung nach Anspruch 1 oder 2, ***dadurch gekennzeichnet,* dass** der obere Teil (26) und der untere Teil (27) am Vorderteil des Gehäuses (8) durch den vorderen Teil (28) zusammentreffen.

4. Schneidvorrichtung nach irgend einem der Ansprüche 1 bis 3, ***dadurch gekennzeichnet,* dass** der obere Teil (26) und der untere Teil (27) direkt am Hinterteil des Gehäuses (8) zusammentreffen.

5. Schneidvorrichtung nach irgend einem der Ansprüche 1 bis 4, ***dadurch gekennzeichnet,* dass** der obere Teil (26) und der untere Teil (27) aus einem einzigen und selben Blech hergestellt sind.

6. Schneidvorrichtung nach irgend einem der Ansprüche 1 bis 5, ***dadurch gekennzeichnet,* dass** der obere Teil (26), der untere Teil (27) und der vordere Teil (28) miteinander durch Schweißen verbunden sind, um ein dichtes Gehäuse (8) zu bilden.

7. Schneidvorrichtung nach irgend einem der Ansprüche 1 bis 6, ***dadurch gekennzeichnet,* dass** das Gehäuse (8) Übertragungselemente (21, 25) einschließt, die dazu bestimmt sind, das Schneidelement (9) um die Achse (12) in Drehung anzutreiben.

8. Schneidvorrichtung nach irgend einem der Ansprüche 1 bis 7, ***dadurch gekennzeichnet,* dass** das Führungslager (10) abnehmbar mit dem Gehäuse (8) verbunden ist.

9. Schneidvorrichtung nach irgend einem der Ansprüche 1 bis 8, ***dadurch gekennzeichnet,* dass** das Führungslager (10) über dem Gehäuse (8) angeordnet ist.

10. Schneidvorrichtung nach irgend einem der Ansprüche 1 bis 9, ***dadurch gekennzeichnet,* dass** das in dem vorderen Teil (28) verankerte Montageelement (29) mittels eines Stiftes (30) ausgeführt ist, der einen ersten Gewindeteil (31) und einen zweiten Gewindeteil (32) umfasst.

11. Schneidvorrichtung nach Anspruch 10, ***dadurch gekennzeichnet,* dass** der erste Gewindeteil (31) dazu bestimmt ist, in ein Gewinde (33) geschraubt zu werden, das in dem vorderen Teil (28) vorgesehen ist.

12. Schneidvorrichtung nach Anspruch 10 oder 11, ***dadurch gekennzeichnet,* dass** der erste Gewindeteil (31) ein Loch durchquert, das in dem oberen Teil (26) des Gehäuses (8) vorgesehen ist.

13. Schneidvorrichtung nach irgend einem der Ansprüche 10 bis 12, ***dadurch gekennzeichnet,* dass** der Stift (30) einen Kragen (38) umfasst, der zwischen dem ersten Gewindeteil (31) und dem zweiten Gewindeteil (32) angeordnet ist, und dass der Stift (30) zusätzlich einen Absatz (39) umfasst, der zwischen dem Kragen (38) und dem ersten Gewindeteil (31) angeordnet ist.

14. Schneidvorrichtung nach Anspruch 13, ***dadurch gekennzeichnet,* dass** eine Ringdichtung (37) vorgesehen ist, wobei die Ringdichtung (37) leicht bei der Montage zwischen dem Kragen (38), dem vorderen Teil (28), dem Absatz (39) und dem oberen Teil (26) zusammengedrückt wird.

15. Landwirtschaftliche Mähmaschine, ***dadurch gekennzeichnet,* dass** sie eine Schneidvorrichtung (4) nach irgend einem der Ansprüche 1 bis 14 umfasst.
